# EUROPEAN PATENT APPLICATION

(11) **EP 1 729 475 A1**
(43) Date of publication of application: **06.12.2006**
(21) Application number: 05425392.7
(22) Date of filing: 31.05.2005
(51) Int. Cl.: H04L 29/06, H04Q 7/28

(54) **SIP based floor control method in "Push to" over cellular services**

(71) Applicant: Siemens S.p.A., 20126 Milano (IT)
(72) Inventor: Blaiotta, Donatella, 27100 Pavia (IT); Micocci, Stefano, 40055 Castenaso (IT); Pavarani, Giovanna, 25020 Poncarale (IT)

(57) **Abstract**

Push-to-watch (PTW) over cellular (2,5G, 3G technology) is a PoC-like service extended to the transmission of multimedia streams including video. A PTW server is part of the IMS platform used to provide IP service to mobile users of cellular networks. The RTCP protocol is usually implemented by PoC/PTW server/client entity to correctly stream RTP packets in may-to-many sessions opened by the canonical SIP INVITE method. Floor control is a typical procedure charged to RTCP for regulating the exclusive access to the common resource. RTCP is a demanding protocol in term of resources, so that in case the duplication of media flows is unneeded, as in one-to-one sessions, RTCP is not the optimum. The described floor control method in one-to-one SIP sessions, implemented both by the PTW server and the client soft-phone, derogates from RTCP in favour of the SIP MESSAGE method described in the IETF RFC 3428 appositely for Instant Messaging. To this aim, the header field "Subject" or any other proprietary header field of SIP MESSAGE request includes either the attributes: Idle, Request, Grant, Taken, Deny, and Release just for extending this method to the floor control. Corresponding SIP MESSAGE requests are provided to carry out the following procedures: "Floor Request at Session Initialization", "Floor Requested with Floor Idle", "Floor Requested with Floor already granted", and "Floor Release (fig.5).

## Description

### FIELD OF THE INVENTION

The present invention relates to the field of the IP-based services provided inside mobile radio networks and more precisely to a SIP based floor control method in "push-to" over cellular services. Used acronyms and bibliographic references are given at the end of the description.

### BACKGROUND ART

"Push-to" over cellular (2,5G, 3G technology) services constitute a typology of services wherein a user at a time gets the permission to send media stream of real-time packet data from its terminal to a group of other users participating the same IP session, simultaneously. The receiving users are selectable from a buddy list and constitute an adhoc group. The term "push" means any facility put at the disposition of the user by the soft-phone client, e.g.: a button, a selectable icon, a voice command, etc.. Once the sending is completed the release of the push button, or the like, alerts the network. Push-to type services deal with media or multimedia streams of packet data representing, e.g.: voice, video-clips; photographies, high-fidelity sound, etc.. The UE clients participating to a service session shall comply with the same standard codecs, e.g.: MPEG-4 for moving picture, JPEG for static images, MPEG-3 for high-fidelity sound, AMR for voice, etc. Differently from video call, that is a full-duplex service largely demanding in term of resources (band, time) and hence costly, push-to type services are only provided on the packet data network and born as half-duplex in order to be less resource-consuming so cheaper but floor control is needed to accede in turn the channel. Three different types of communication sessions are generally implemented, namely: one-to-one, one-to-many, and many-to-many.
- A one-to-one session takes place between two users only and duplication is unneeded but not floor control. Data are exchanged in turn between the two users participating the session, the sender may select the unique receiver from a buddy list. Despite the unique invited, the buddy list is always useful to see if a friend is available.
- A one-to-many session is a session between a sender and many receivers; for example a video transmitted by the sender can be seen by several users simultaneously; generally speaking always and only the sender can send data to the others. Duplication of streaming data and floor control are needed.
- A many-to-many session is a session among several users; it foresees that one of the users already in the session can ask for the inclusion of other users in the same session and all the participating users can send, in turn, their data to all the others. Duplication of streaming data and floor control are needed.

Two standardization groups, namely 3GPP and OMA, with two different approaches are known to provide "push-to" type services inside mobile radio networks. 3GPP makes use of the IMS platform **[3GPP_IMS]** to offer to operators, service providers, and clients, the sort of service capabilities that IP is designed to provide. IMS constitutes a part of the Release 5 Core Network infrastructure of PLMN, which is divided into a CS domain, a PS domain and an IM subsystem. The IMS platform offers to the operators, service providers, and clients, the sort of service capabilities that IP is designed to provide. The IM subsystem has as its primary focus to provide the users/clients the ability to join multimedia session in which they are allowed to send and receive voice and data communications, even when roaming. At this purpose the IMS platform uses the SIP protocol **[RFC3261]** for the establishment of sessions and the service provisioning on mobile networks. SIP is an application-layer control (signalling) protocol for creating, modifying and terminating sessions with one or more participants. These sessions include Internet multimedia conferences, Internet telephone calls, presence service and multimedia distribution. SIP supports user mobility by proxying and redirecting requests to the user's current location. For the same purpose **[3GPP_ServReq]** identifies the necessary requirements from the user point of view. According to this specification, the IM subsystem should provide the following capabilities:
- Access control: the IMS must be able to verify at any time if the user is allowed to use the resources of IMS.
- Capability negotiation: the IP multimedia applications must have the possibility to identify and select the available media components and the QoS of the sessions. The IM subsystem must allow such negotiations to be started from any party (user, operator, or the application itself on behalf of them) and at any time (at the session invocation, during the acceptance or during the session).
- Redirecting of multimedia session: the IM subsystem must allow the identification of an alternative destination for an IP multimedia session or individual media of an individual session. Similarly to the capability negotiations, the IM subsystem must allow such redirection to be started from any party (the receiving party, the sending party or the network entities on behalf of them), at any time (prior the set up of the session, during the initial request, during the establishment or during the ongoing session).
- Invoking an IP multimedia session: the user must be able to invoke one or more IP multimedia sessions and to activate concurrent applications inside each multimedia session. At this purpose the identification of the entities will be allowed through the use of both telecom and Internet numbering, depending on the ability of the originating party.
- Handling an incoming session: the terminating entity must be able to identify the session originator, to negotiate the capabilities interacting with the user profile and to decide if accept or reject the session. In particular it must be possible to accept only a subset of the offered media.
- Handling of an ongoing session: the user, as said before, must be able to decide about the addition or the deletion of media components of IP multimedia applications during a session. Moreover it must be possible for the user to suspend and resume at a later time a multimedia session.
- Ending a session: the user must be able to end an ongoing session at any time.
- Local Services: the users must be able to access, while roaming outside the home environment, services of local nature offered by the visited network.

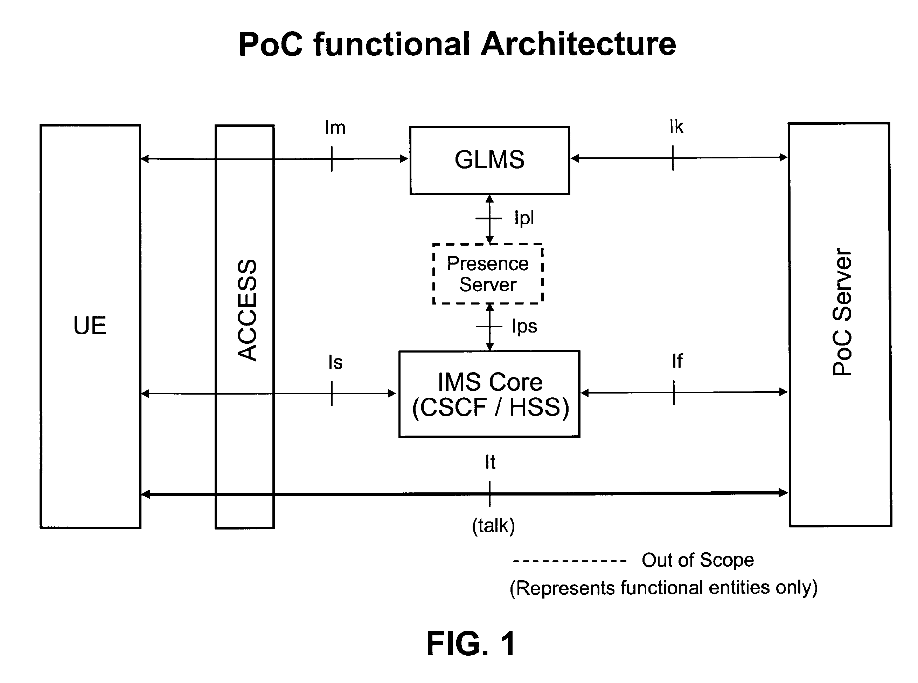

On the other hand, OMA identifies a family of services called Push To Talk over Cellular (PoC), that implements the capabilities for the control and duplication of the media (PoC User Plane). OMA approach aims to define a PoC Server in terms of functional entities without mapping them to IMS functional entities identified by 3GPP. The PoC functional architecture is outlined in **fig.1** reproduced from **[PoC_Arch],** it includes the following blocks: UE, ACCESS, GLMS, Presence Server (out of scope), IMS Core (CSCF / HSS), and PoC Server; interconnected as indicated in the figure by means of the following interfaces: Im, Ik, Ipl, Ips, Is, If, and It. The definition of the interface between IMS Core and the PoC Server is out of the scope. **[PoC_User]** specifies the User Plane functions of the PoC service. The Signalling Plane procedures (i.e., the control procedures based on SIP protocol) are defined in **[PoC_Sign].**

In PoC, the media related to a voice communication are transported by RTP/UDP/IP protocols. The media are encapsulated in the RTP packets with media specific RTP payload formats. RTP provides end-to-end network transport functions suitable for applications transmitting real-time data, such as audio, video or simulation data, over multicast or unicast network services. RTP does not address resource reservation and does not guarantee quality-of-service for real-time services. The data transport is augmented by a RTP Control Protocol (RTCP), see **[RFC3550]**, to allow monitoring of the data delivery in a manner scalable to large multicast networks, and to provide minimal control and identification functionality. RTP and RTCP are designed to be independent of the underlying transport and network layers.

As reported in **[PoC_User],** Talk Burst Control (TBC) is synonym of Floor Control, and a TBC Protocol (TBCP) takes care of floor control to insure that only one user is streaming the media at a given time. TBCP uses RTCP APP (Application) packets in four main floor control procedures:
- Floor Request Procedures (initialization),
- Floor Request Procedure (with floor idle),
- Floor Release Procedures,
- Floor Revoke Procedures.

The required control messages consist of the following control methods:
- Floor Idle ― The PoC server notifies the UEs that no one owns the media resource, that the floor is open / available for users to request.
- Floor Release ― A UE notifies the PoC server that it is releasing the media resource.

Hence moving the PoC server into the "Idle" state.
- Floor Request ― A UE requests that the PoC server shall allocate the media resources to his/her device.
- Floor Grant ― The PoC server notifies the UE that it has been granted the floor and therefore has been granted permission to use the media resource.
- Floor Taken ― The PoC server notifies all UEs, except the UE that has been granted the floor that the floor has been granted to another UE. Also the identification of the user that has been granted permission to use the media resource is communicated in the message.
- Floor Deny ― The PoC server notifies a UE that it has been denied permission to use the media resource.
- Floor Revoke - Which allows the PoC server to revoke the media resource from a UE. It's used by the system to prevent overly long use of the floor resource (this method will be not implemented by the invention).

### OUTLINED TECHNICAL PROBLEM

The RTCP, and so the derived TBCP, is based on the periodic transmission of control packets to all participants in the session, using the same distribution mechanism as the data packets. The RTP/RTCP suite provides multiplexing of the data and control packets, for example using separate UDP port numbers for data (RTP) and control (RTCP) packets. The primary function of RTCP is to provide feedback on the quality of data distribution by means of sender and receiver reports (SR, RR). Other functions are, e.g.: carrying a persistent transport-level identifier for an RTP source called the canonical name or CNAME; controlling the rate in order for RTP to scale up to a large number of participants; conveying minimal session control information, for example participant identification to be displayed in the user interface, etc. A reference clock is shared by all media to be synchronized to each other. A timestamp reflects the sampling instant of the first octet in the RTP data packet. The SR and RR carried by RTCP are synchronized to the relevant RTP data by a timestamp pairs which are not transmitted in every data packet, but at a lower rate in RTCP SR packets. All participants use the same value for the session bandwidth so that the same RTCP interval will be calculated. The control traffic should be limited to a small and known fraction of the session bandwidth, small so that the primary function of the transport protocol to carry data is not impaired.

From the above considerations, better detailed in the [RFC3550], it comes out that RTCP has been primarily designed to face streaming sessions with duplicated data flows typical of many-to-many scenarios. Methods and messages used by the PoC Client and the PoC server to implement floor control, inevitably reflect the many-to-many nature of RTCP. This choice is not the best when the scenario is "one-to-one" and duplication of RTP packets is unnecessary. Simply defining a reduced RTCP APP based protocol between the two parties in communication is not enough. The reason is that a certain consuming of network resources larger than the ones strictly necessary still remains.

### OBJECTS, SUMMARY AND ADVANTAGES OF THE INVENTION

The main object of the present invention is that to overcome the defects of the prior art and indicate a lesser demanding floor control mechanism more suitable for one-to-one streaming session.

The invention achieves said object by providing a floor control method in a cellular telephony network which provides a Push-to-... type service in one-to-one IP session between two user clients by means of a server, as disclosed in claim 1.

According to the present invention, instead of the usual RTCP (or TBCP) protocol, a SIP based method is used. To this aim the SIP extension for Instant Messaging, see **[RFC3428]**, is further extended to carry the Floor control signalling. New Information Elements are included for this purpose in the header field "Subject" of the MESSAGE request or in any other proprietary header field (to say: header field available for proprietary use). Since now a similar use of the SIP MESSAGE method was unimaginable in the art.

Other object of the invention is the extended SIP MESSAGE request.

The main advantage of the invention in one-to-one sessions is that the SIP protocol stack on mobile terminals is easier to find and use than RTP/RTCP stack and there is no need for another signalling server based on RTCP.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1,** already described, shows the PoC functional architecture reproduced from [PoC_Arch];
- **fig.2** shows a high level functional UMTS-IMS architecture suitable for Push-to-type-... services;
- **fig.3** shows a message sequence chart relevant to a known one-to-one session establishment procedure executable in the system of fig.2;
- **figures 4 to 7** show some floor related procedures according to the present invention executable in the system of fig.2;
- **fig.8** shows a message sequence chart relevant to a known one-to-one session release procedure executable in the system of fig.2.

### DETAILED DESCRIPTION OF AN EMBODIMENT OF THE INVENTION

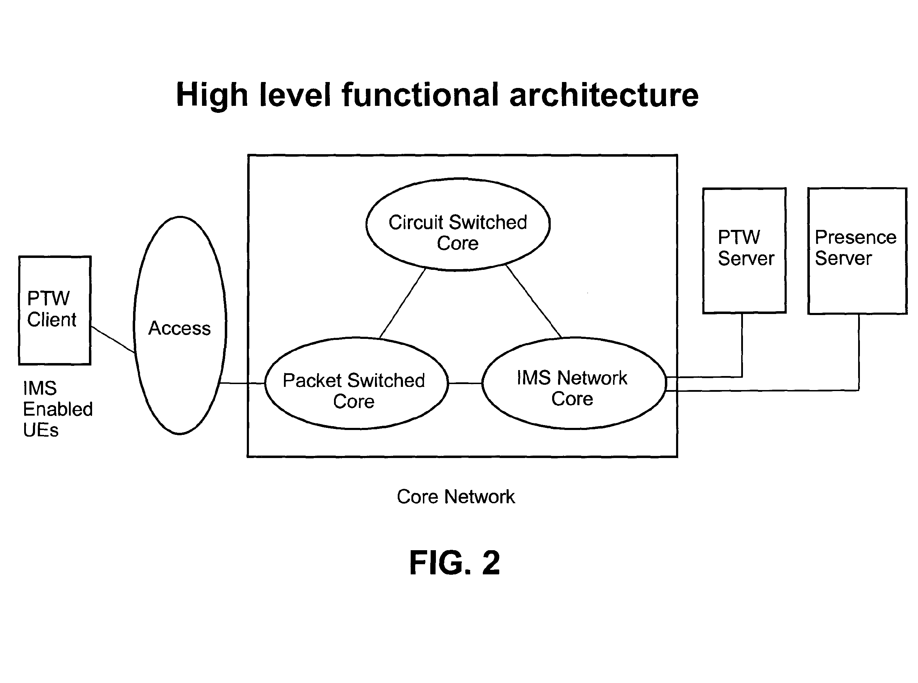

With reference to fig.2 the schematized UMTS-IMS architecture includes the following functional blocks: PTW Client, Access Network, Core Network, PTW SM, and Presence Server. The Core Network includes in its turn three interconnected functional blocks: Circuit Switched Core, Packet Switched Core, and IMS Network Core. The PTW Client block is functionally connected to the Packet Switched Core trough the Access Network. The IMS Network Core is connected to the Packet Switched Core, at one side, and to the PTW SM and Presence Server at the other side. In this way the IMS Network Core has the full control and visibility of the information relevant to the PTW Client which is installed in an IMS Enabled Terminal.

PTW is the acronym of a Push-to-Watch service first time disclosed in two preceding patent applications of the same Applicant filed on the same date, namely:
- EP04425543.8 (S. Micocci, G. Pavarani), filed on 21/07/2004.
- EP04425547.9 (D. Blaiotta, S. Micocci) filed on 21/07/2004.

The first application is directed to the disclosure of the PTW Server architecture and its application during many-to-many PTW sessions, wherein the Floor control is regulated in the known way by the RTP/RTCP protocol. The second application is directed to the disclosure of some extensions to the SIP MESSAGE method in order to replace the usual SIP messages foreseen in the PTW procedures concerning the establishment or release SIP sessions either one-to-one or many-to-many. Also in this case Floor control is regulated in the known way by the RTP/RTCP protocol.

Push-to-Watch service consists of transmitting, via IMS, a data stream from a multimedia (video and audio) mobile terminal to one or more other mobile terminals. In this way, an user accessing the service could ask for receiving an audio-video content or decide to send the data stream to another mobile terminal, acting as a multimedia source. Audio/video contents are directly streamed from the source to the user(s) without any kind of store and forward mechanism. The sender selects one or more users to contact, then, starts streaming the video content by pushing a button on his/her terminal. Two (one-to-one) or more than two partners (many-to-many) can be involved in the same session. During the PTW session, every participant can take the permission to transmit and he can add a new user to the session. For a certain time duration one user only will have the permission (GRANT) to transmit its media contents to the others. Many-to many PTW sessions are not considered by the method of the present invention.

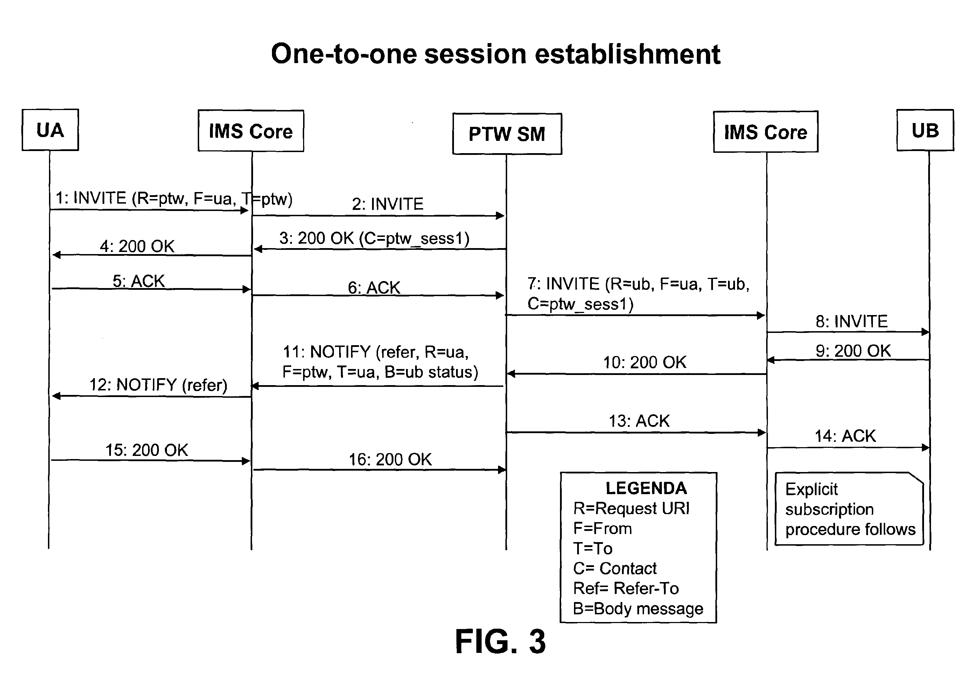

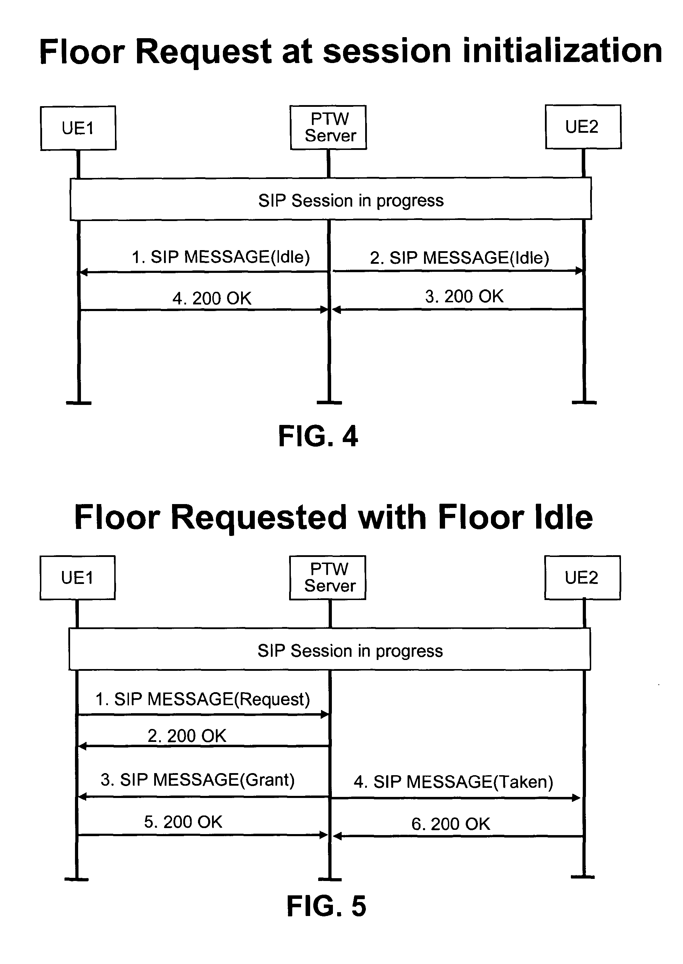

One-to-one session establishment preliminary to any type of floor control is described in **fig.3**; the relevant message sequence chart is identical to the one described in the secondly cited patent application (EP04425547.9 with reference to fig.5), or alternatively to the more detailed figures 3 to 9 therein enclosed. The following Network Elements involved in the mimic of the message exchange between the end users UA and UB are indicated on the top of the figures: UA (inviter), IMS Core, PTW Session Manager (SM); IMS Core, UB (invited).

The following **figures 4 to 7** concern the main Floor Control procedures according to the present invention. For the sake of simplicity a simplified scenario without the interactions with the IMS Core is referred. The involved network elements indicated on the top of the figures are the end users UE1 and UE2 and the PTW Server. The dialogue between two network elements agrees with the Client/Server paradigm carried out by means of Request/Response exchanged messages.

With reference to **fig.4,** a "Floor Request at Session Initialization" procedure is described. The implicit Floor Request model described in **[Poc_User]** is deliberately not implemented. Instead, the PTW Server sends a Floor Idle request named SIP MESSAGE(Idle) to the two users UE1 and UE2 to indicate the idle state of the floor, to say the resource is available but neither UE1 nor UE2 have anything to transmit to each other; then PTW waits for the first Floor Request message. The Floor Idle request is derived from a SIP method called MESSAGE generally used for Instant Messaging, as described in **[RFC3428]**. The header field "Subject" of the MESSAGE request now includes the attribute "Idle" for extending this method to the floor control. Any proprietary header field with value "Idle" could also be used.

Without reference to any figure, a "Floor Request when floor message is lost" is described. The Floor Control message (Floor Grant in normal case) from the PTW server may be lost. Therefore, the UE starts a Floor Request timer immediately after the SIP session is established and hence starts to periodically send Floor Request messages until a Floor Control message from the PTW server is received. The Floor Request timer expires while the user still is holding down the PTW button and the UE has not received any floor control message, therefore a new Floor Request message is sent.

With reference to **fig.5,** a "Floor Requested with Floor Idle" procedure is described. The initial condition is the Floor in idle state with no users currently owning the media stream.
- The UE1 sends a Floor Request by means of a SIP MESSAGE(Request) request to the PTW server. The header field "Subject" of the SIP MESSAGE(Request) includes the attribute "Request" for extending this method to request the idle floor. Any proprietary header field with value "Request" could also be used.
- The PTW server determines that the resource is available and UE1 may have the floor, and issues a Floor Grant request by means of a SIP MESSAGE(Grant) to UE1, and a Floor Taken request named SIP MESSAGE(Taken) to UE2. The Floor Taken message contains the sender identification of the user UE1 that has been granted the resource. The header field "Subject" of the SIP MESSAGE(Grant) includes the attribute "Grant" for extending this method to grant the idle floor to a requester. Any proprietary header field with value "Grant" could also be used. The header field "Subject" of the SIP MESSAGE(Taken) includes the attribute "Taken" for extending this method to signal the busy state of the floor. Any proprietary header field with value Taken" could also be used.
- The Floor Request message is sent periodically by UE1 until a 200 OK response to the SIP MESSAGE(Grant) is issued by UE#1 and this is managed by the floor request timer.

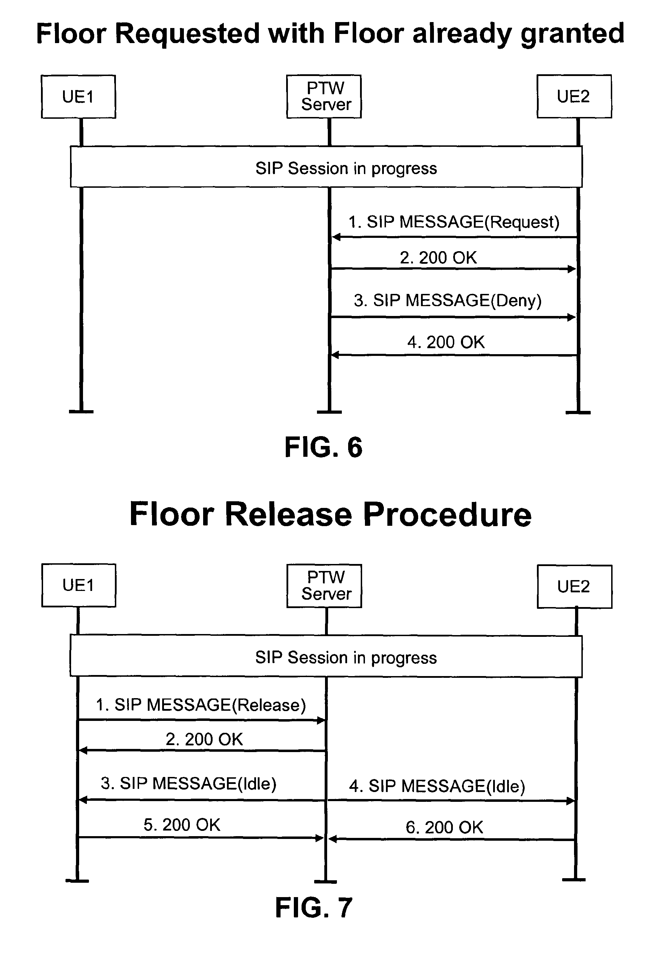

With reference to **fig.6**, a "Floor Requested with Floor already granted" procedure is described. In this procedure, the floor is already granted to a user on the call, user UE1 in the present case. Another user UE2 attempts to request the floor that is already allocated. UE2 may also be receiving a RTP stream while making the request. The mimic is the following:
- UE2 presses the PTW button to request the floor.
- The UE2 client makes a Floor Request for the floor to the PTW server sending the SIP MESSAGE(Request).
- The PTW server denies this request via a Floor Deny response sending a SIP MESSAGE(Deny) request. The header field "Subject" of the SIP MESSAGE(Deny) includes the attribute "Deny" for extending this method to refuse the floor to a requester. Any proprietary header field with value "Deny" could also be used.
- The Floor Request is periodically sent until a Floor Deny or Floor Taken or RTP media packet response is received by UE2 and this is managed by the floor request timer.

With reference to **fig.7**, a "Floor Release" procedure is described. In this procedure, it is assumed that UE1 owns the floor, and is releasing the media resource back to the PTW server. The mimic is the following:
- UE1 stops sending and releases the PTW button.
- The UE1 client signals to the PTW server that it is releasing the floor via a Floor Release message sending a SIP MESSAGE(Release) request. The header field "Subject" of the SIP MESSAGE(Release) includes the attribute "Release" for extending this method to release the floor. In the Release message the sequence number of the last RTP packet shall be included by UE1. Any proprietary header field with value "Release" could also be used.
- The PTW server indicates to both the UE1 and UE2 that the floor is idle sending a respective SIP MESSAGE(Idle) request. The UE1 client uses this message as an acknowledgement to the Floor Release message sent previously. The UE2 client provides a Floor Idle Notification to the user.
- The Floor Release message is sent periodically by UE1 to the PTW server until UE1 receives a Floor Idle message (the floor release timer is described).
- The UE1 and UE2 clients notify the users that the floor is now open.

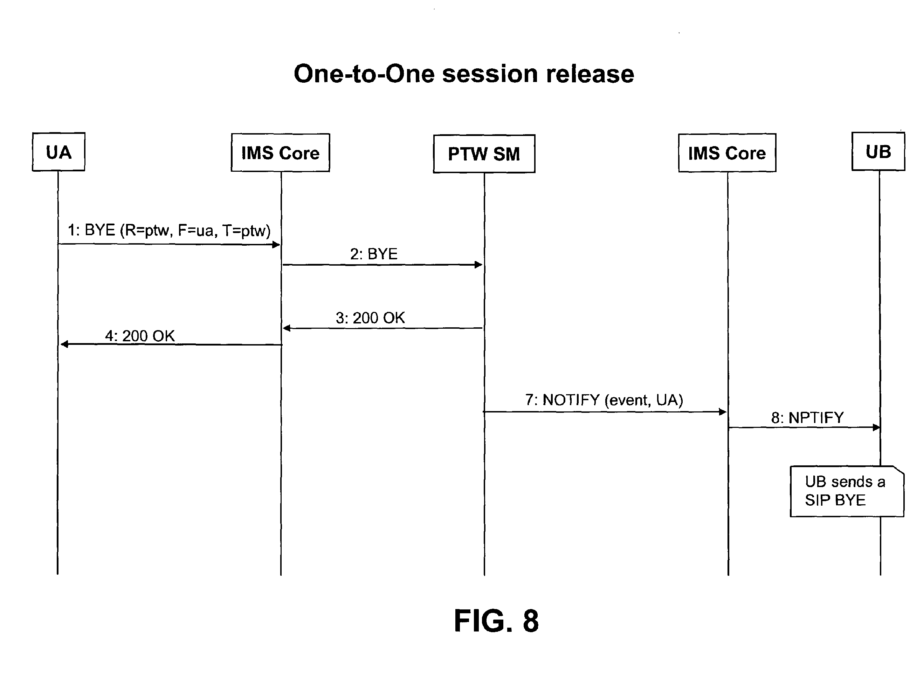

A user may decide to leave the current PTW session in any time. In this case a procedure to release the one-to-one SIP session is carried out. The relevant message sequence chart is described in **fig.8,** this chart is identical to the one described in the secondly cited application (EP04425547.9 with reference to the fig.7).

On the basis of the above description some changes may be introduced in the exemplary embodiment by the skilled in the art without departing from the scope of the invention.

### USED ACRONYMS

3GPP - 3^{rd} Generation Partnership Program
AMR - Adaptive Multi-rate
CNAME - Canonical end-point identifier SDES item
CSCF - Call State Control Function
GLMS - Group and List Management Server
HSS - Home Subscriber Server
IETF - Internet Engineering Task Force
IMS - IP Multimedia core network Subsystem
OMA - Open Mobile Alliance (http://www.openmobilealliance.org)
PTT - Push To Talk
PTW - Push To Watch
QoS - Quality of Service
RFC - Request for Comments
RR - Receiver Report
RTCP - Real-time Transport Control Protocol
RTP - Real-time Transport Protocol
SCF - State Control Function
SDES - Source description RTCP packet
SIP - Session Initiation Protocol
SR - Sender Report
SSRC - Synchronization Source
TBC - Talk Burst Control
TBCP - TBC Protocol
TS ― Technical Specification
UDP ― User Datagram Protocol
UE - User Equipment

### REFERENCES

- [[3GPP_ServReq]: 3GPP TS 22.228 V 6.5.0, "Service requirements for the Internet Protocol (IP) multimedia core network subsystem"; Stage 1, Release 6", (January 2004).
- [3GPP_IMS]: 3GPP TS 23.228 V 6.5.0, "IP Multimedia Subsystem (IMS), Release 6", (March 2004).
- [PoC_User]: Push-to-Talk over Cellular (PoC) User Plane Transport Protocols; Release 1.0.16 (Mars 2005).
- [PoC_Arch]: Push-to-Talk over Cellular (PoC): Architecture; Release 1.1.0 (August 2003).
- [PoC_Sign]: Push-to-Talk over Cellular (PoC) Signalling Flow; Release 1.1.3 (August 2003).
- [RFC3261]: IETF RFC 3261 "Sip Initiator Protocol", June 2002.
- [RFC3428]: IETF RFC 3428 "Session Initiation Protocol (SIP) Extension for Instant Messaging", H. Schulzrinne, et al., December 2002
- [RFC0768]: IETF RFC 0768 or STD 0006, "User Datagram Protocol", J. Postel, Aug. 28 1980
- [RFC3550]: IETF RFC 3550, "RTP: A Transport Protocol for Real-Time Applications", H. Schulzrinne, S. Casner, R. Frederick, V. Jacobson, July 2003.

## Claims

1. Floor control method in a cellular telephony network which provides a Push-to-... type service by means of a server (PTW) which carries out floor control to establish which requesting user client (UE1, UE2) is granted the exclusive right to temporarily transmit real-time media packets on a common resource in a current one-to-one session started up by an inviter (UE1, UE2) through the Session Initiation Protocol, called SIP, **characterized in that** said floor control is based on an extended SIP method.

2. The floor control method of the claim 1, **characterized in that** said extended SIP method is the "MESSAGE" request already standardized for Instant Messaging.

3. The floor control method of the claim 2, **characterized in that** the server (PTW) sends to the two end-to-end user clients (UE1, UE2) a SIP MESSAGE request with an attribute "Idle" in the header field named "Subject" or in any other header field available for proprietary use to signal that said common resource is available but none of the user clients has requested it.

4. The floor control method of the claim 3, **characterized in that** a user client (UE1) sends to the server (PTW) a SIP MESSAGE request with an attribute "Request" in the header field "Subject" or in any other header field available for proprietary use to signal the request of the idle floor.

5. The floor control method of the claim 4, **characterized in that** the server (PTW) sends to the requesting client (UE1) a SIP MESSAGE request with an attribute "Grant" in the header field "Subject" or in any other header field available for proprietary use to signal the grant of the idle floor.

6. The floor control method of the claim 5, **characterized in that** the server (PTW) sends to the other user client (UE2) a SIP MESSAGE request with an attribute "Taken" in the header field "Subject" or in any other header field available for proprietary use to signal the busy state of the floor.

7. The floor control method of the claim 6, **characterized in that** the server (PTW) sends to a user client (UE2) which requests the floor a SIP MESSAGE request with an attribute "Deny" in the header field "Subject" or in any other header field available for proprietary use to signal the refuse of the already granted floor.

8. The floor control method of any preceding claim from 2, **characterized in that** a user client (UE1) sends to the server (PTW) a SIP MESSAGE request with an attribute "Release" in the header field "Subject" or in any other header field available for proprietary use to signal the release of the floor.

9. A SIP MESSAGE method, **characterized in that** its header field named "Subject" or any other header field available for proprietary use includes an attribute usable to control the floor.
